# EUROPEAN PATENT APPLICATION

(11) **EP 2 500 984 A1**
(43) Date of publication of application: **19.09.2012**
(21) Application number: 12001356.0
(22) Date of filing: 29.02.2012
(51) Int. Cl.: H01R 13/502, H01R 13/58

(54) **Charging connector and assembling method therefor**

(30) Priority: 17.03.2011 JP 2011059438
(71) Applicant: Sumitomo Wiring Systems, Ltd., Yokkaichi-city, Mie 510-8503 (JP)
(72) Inventor: Osawa, Kiyoshi, Yokkaichi-City Mie 510-8503 (JP)
(74) Representative: Müller-Boré & Partner Patentanwälte

(57) **Abstract**

An object of the present invention is to position two half members without being subject to spatial restriction.

The present invention concerns a charging connector 10 including a housing 11 integrally formed by bolting a pair of half members. A front housing 20 is mounted in a front end portion of the housing 11 and tightly held by two housings 30, 40. A positioning rib 16 for positioning the both housings 30, 40 is provided at a position of the base-side housing 30 distant from the front housing 20 and comes into contact with the inner surface of the cover-side housing 40 when the both housings 30, 40 are assembled in proper postures.

## Description

### Charging Connector And Assembling Method Therefor

The present invention relates to a charging connector and to an assembly or production method therefor.

A charging connector for charging a battery installed in an electric vehicle or the like is conventionally known, for example, from Japanese Unexamined Patent Publication No. 2003-36924. This includes a grip integrally formed by bolting one half member and another half member. A fitting pin projects from a surface of the one half member facing the other half member, and a pin fitting hole into which the fitting pin is fittable is perforated in the facing surface of the other half member. The two half members are positioned by fitting the fitting pin into the fitting hole.

However, in the above construction, a base where the pin fitting hole is formed needs to be set in providing the pin fitting hole, and such a base is normally provided by padding on the facing surface of the other half member projecting radially inwardly. Accordingly, the pin fitting hole can be provided if a sufficient space is secured in a housing, but the base cannot be set and the two half members cannot be positioned if no sufficient space is secured in the housing.

The present invention was completed in view of the above situation and an object thereof is to position two half members without being subject to spatial restriction.

This object is solved according to the invention by the features of the independent claims. Preferred embodiments of the invention are subject of the dependent claims.

According to the invention, there is provided a connector, comprising a housing integrally formed by fixing a pair of half members to each other, wherein: a connector connecting portion is mounted in a front end portion of the housing and tightly held by the both half members; and at least one positioning portion for positioning the both half members is provided at a position of one half member distant from the connector connecting portion and comes into contact with the inner surface of the other half member when the both half members are assembled in proper postures.

According to a particular embodiment of the invention, the half members are fixed to each other by bolting.

According to a further particular embodiment of the invention, there is provided a charging connector, comprising a housing integrally formed by bolting a pair of half members, wherein a connector connecting portion is mounted in a front end portion of the housing and tightly held by the both half members; and a positioning portion for positioning the both half members is provided at a position of one half member distant from the connector connecting portion and comes into contact with the inner surface of the other half member when the both half members are assembled in proper postures.

Accordingly, the both half members can be positioned by bringing the positioning portion into contact with the inner surface of the other half member. That is, it is sufficient to provide a functional portion necessary to position the both half members only in the one half member and such a functional portion needs not be separately provided in the other half member. Therefore, the both half members can be positioned without being subject to spatial restriction.

The present invention is preferably embodied to have the following constructions.

A plurality of bolt fastening portions may be arranged in the one half member; and the positioning portion may be provided at such a position as to prevent the other half member from rotating upon receiving a force in a rotational direction produced as the bolting is performed at the bolt fastening portion arranged at a position most distant from the connector connecting portion.

According to this construction, when the bolting is performed after the both members are assembled, the positioning portion comes into contact with the inner surface of the other half member even if the other half member tries to rotate as the bolting is performed. Therefore, the rotation of the other half member is prevented and the both half members are held in proper postures.

The positioning portion may be connected to one opening edge of the one half member and the bolt fastening portion may be connected to another opening edge substantially facing the one opening edge.

According to this construction, the force in the rotational direction received when the bolting is performed can be minimized since the positioning portion is provided at the position as far apart as possible from the bolt fastening portion.

The housing may include a grip part which is arranged behind the connector connecting portion and from which at least one wire is drawn out; and the positioning portion may be provided in the grip part.

That is, the connector connecting portion is firmly held by the both half members and the both half members can be firmly held (in a rigid state). However, unlike the connector connecting portion, there is no member in the grip part which is firmly held. Thus, the both half members are likely to be displaced. However, since the positioning portion is provided in this grip part, displacements of the both half members in the grip part can be easily prevented.

At least one wire may be drawn out from the housing, the wire being held fixed with respect to the housing by a holding member being mounted into a mounting portion provided in the housing.

The mounting portion substantially may be bilaterally symmetrically divided by both half members and/or the mounting portion of the one half member and that of the other half member may be arranged to substantially face each other with the both half members assembled.

The positioning portion may be provided adjacent to the mounting portion.

According to another aspect of the invention, there is provided a method of assembling or producing or manufacturing a charging connector, in particular according to the above aspect of the invention or a particular embodiment thereof, comprising a housing, comprising the following steps: providing a pair of half members to form a housing of the charging connector; mounting a connector connecting portion in a front end portion of the housing and tightly holding the connector connecting portion by the both half members when the both half members are fixed to each other; and positioning the both half members while fixing them by at least one positioning portion for positioning the both half members provided at a position of one half member distant from the connector connecting portion, wherein the positioning portion comes into contact with the inner surface of the other half member when the both half members are assembled in proper postures.

The present invention is preferably embodied as follows.

The half members may be fixed to each other by bolting.

A plurality of bolt fastening portions may be arranged in the one half member; and wherein the positioning portion is provided at such a position as to prevent the other half member from rotating upon receiving a force in a rotational direction produced as the bolting is performed at the bolt fastening portion arranged at a position most distant from the connector connecting portion.

The positioning portion may be connected to one opening edge of the one half member and the bolt fastening portion may be connected to another opening edge substantially facing the one opening edge.

The method may further comprise providing the housing with a grip part which is arranged behind the connector connecting portion and drawing out at least one wire from the grip part; and wherein the positioning portion is provided in the grip part.

The method may further comprise drawing out at least one wire from the housing, and fixing the wire with respect to the housing by mounting a holding member into a mounting portion provided in the housing.

The positioning portion may be provided adjacent to the mounting portion.

According to the above, it is possible to position two half members without being subject to spatial restriction.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a charging connector,
FIG. 2 is a side view of the charging connector,
FIG. 3 is a perspective view showing a state where a cover-side housing is removed in FIG. 1,
FIG. 4 is a perspective view showing only a base-side housing in FIG. 3,
FIG. 5 is a side view of a wire holding member in FIG. 3 when viewed sideways,
FIG. 6 is a section showing the wire holding member in FIG. 3 cut along a longitudinal direction of a wire to be divided into upper and lower parts when viewed sideways,
FIG. 7 is a section along A-A of FIG. 2,
FIG. 8 is a side view showing an inner surface side of the base-side housing,
FIG. 9 is a side view showing an inner surface side of the cover-side housing,
FIG. 10 is a section along B-B of FIG. 8,
FIG. 11 is a perspective view of a half member,
FIG. 12 is a plan view of the wire holding member,
FIG. 13 is a side view of the wire holding member,
FIG. 14 is a front view of the wire holding member, and
FIG. 15 is a section along C-C of FIG. 12.

### <Embodiment>

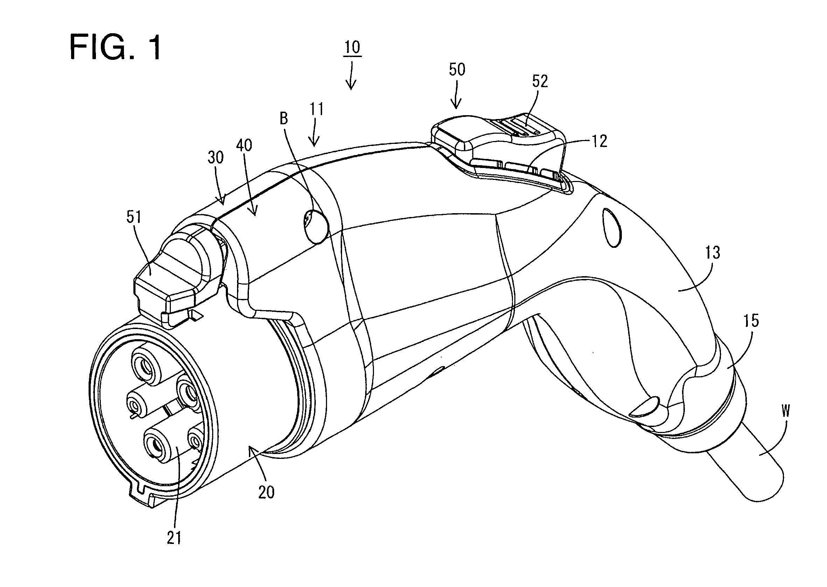

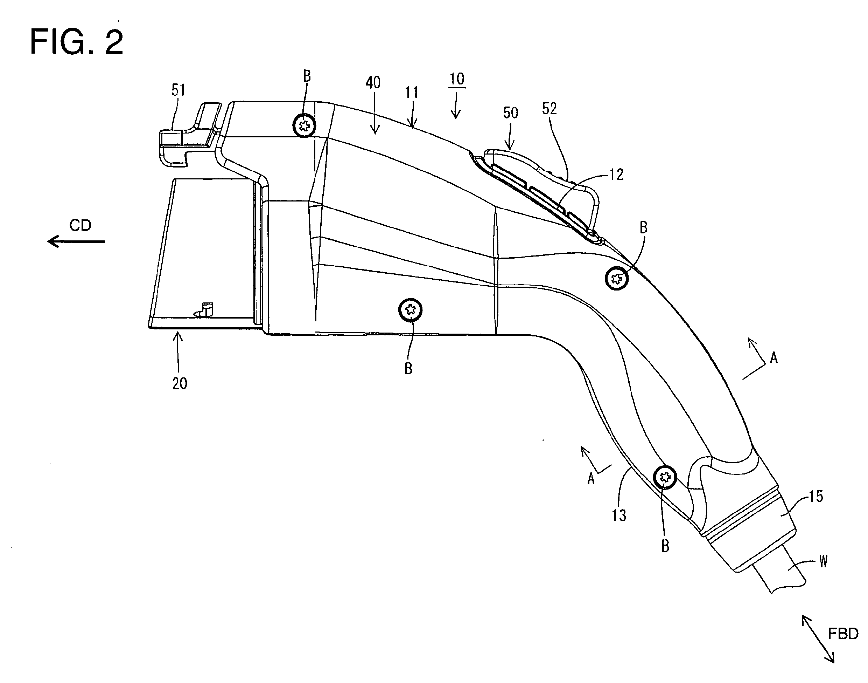

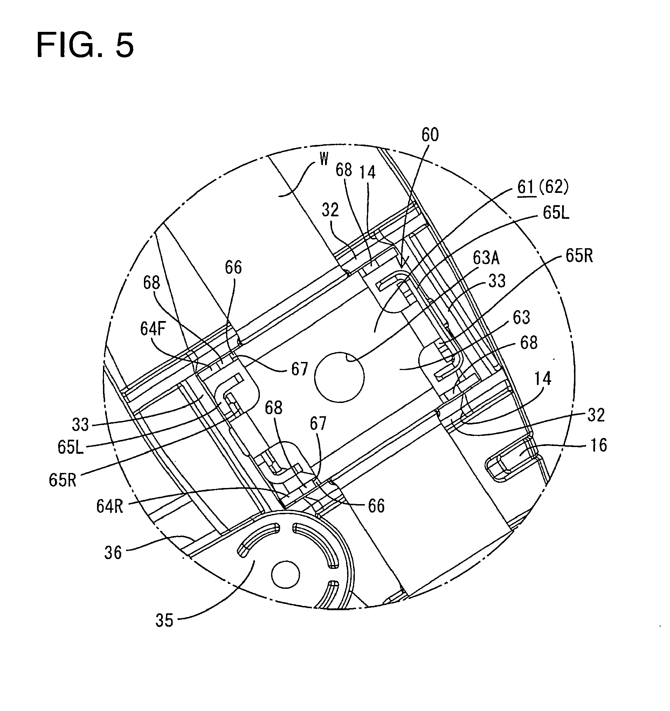

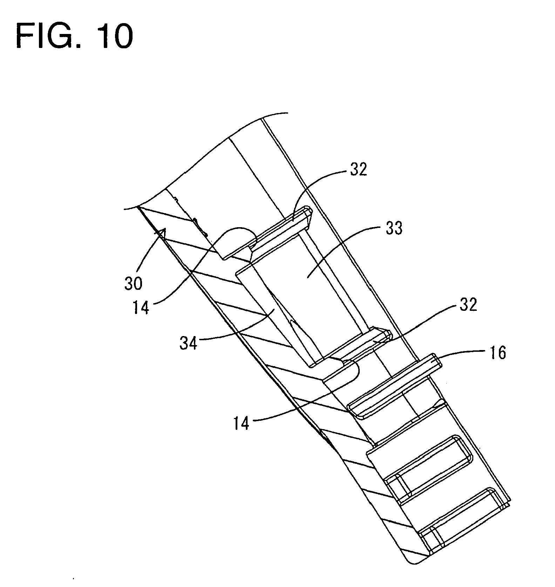

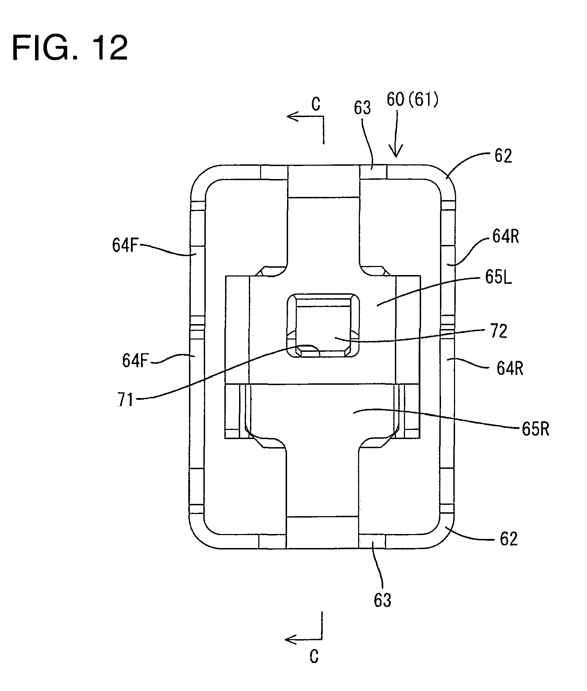

A particular embodiment of the present invention is described with reference to FIGS. 1 to 15. As shown in FIG. 1, a charging connector 10 in this embodiment includes a housing 11 particularly having a pistol shape (gun shape) as a whole and this housing 11 is composed of or comprises a front housing 20 connectable to a vehicle-side connector (not shown) and a base-side housing 30 and a cover-side housing 40 holding this front housing 20 from left and right sides. Further, as shown in FIG. 2, the housing 11 is fixed or fastened or separably mounted or openably assembled (particularly bolted by one or more, particularly a plurality of bolts B) by integrally assembling the base-side housing 30 and the cover-side housing 40 (particularly by these one or more bolts B). It should be understood that the housing 11 may be (alternatively or additionally) assembled by connecting the base-side housing 30 and the cover-side housing 40 by one or more clips, retaining members, latches, or similar coupling members.

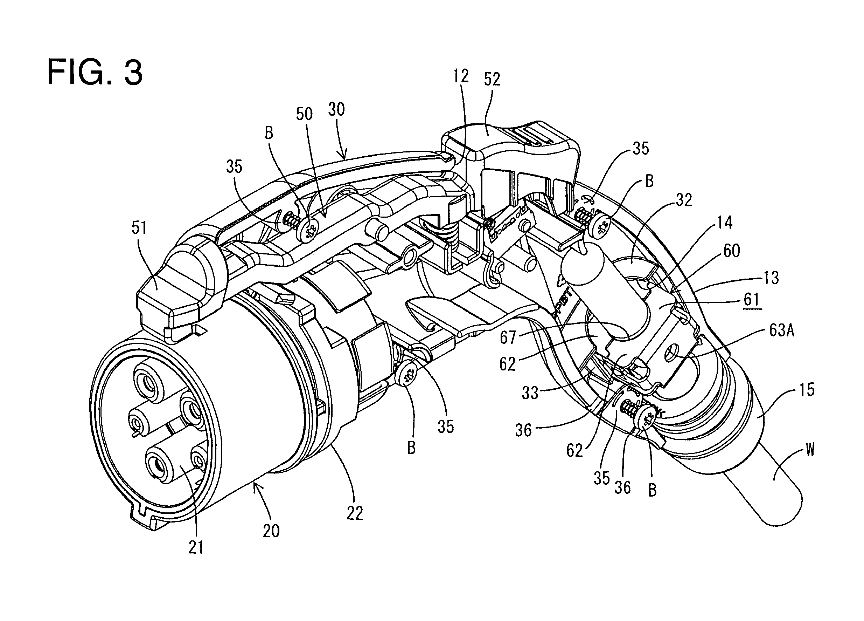

As shown in FIG. 3, at least one wire W of this embodiment is held in a (particularly metal) clip 60, which is housed in a grip part 13 as a hand-held part of the housing 11. The grip part 13 particularly substantially extends obliquely downward (at an angle different from 0° or 180°, preferably substantially obtuse angle with respect to a connecting direction CD of the front housing 20 to the vehicle-side connector) toward the rear side from a release button 52. Note that a longitudinal direction of the wire W is referred to as forward and backward directions FBD and a draw-out direction of the wire W is referred to as a backward direction in the following description on the internal structures of the grip part 13 and the (metal) clip 60.

The wire W is drawn out backward from the grip part 13. This wire W is to be connected to a household power supply, and a battery (not shown) installed in a vehicle is to be charged by connecting this charging connector 10 to the vehicle-side connector.

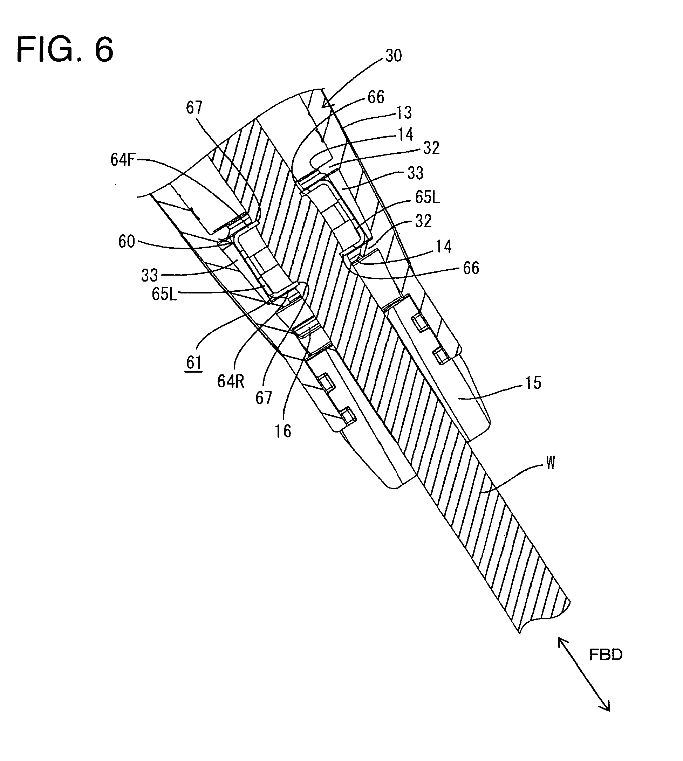

A contact (particularly rubber) bush 15 is mounted in a draw-out opening of the grip part 13 for the wire W. The contact (rubber) bush 15 is made of a flexible or resilient material (such as flexible rubber material) and projects backward from the rear end of the grip part 13 as shown in FIG. 6. The contact (rubber) bush 15 is to be held or positioned on the inner peripheral surface of the grip part 13 while being retained in forward and backward directions FBD by mating engagement of one or more projections and one or more respective recesses. The wire W penetrates through the contact (rubber) bush 15, thereby being prevented from being damaged such as by the contact of the wire W with the rear end of the grip part 13 when the wire W is shaken in a vertical or lateral direction and/or providing sealing between the wire and the housing 11 (the grip part 13).

As shown in FIG. 3, a lever 50 is housed in the two housings 30, 40 and a lock claw 51 is provided on or near the front end of the lever 50. This lock claw 51 substantially projects forward (in connection direction CD) from the front end opening of the two housings 30, 40 and/or is arranged above or outward from the front housing 20. When the charging connector 10 is connected to the vehicle-side connector in the connecting direction CD, the lock claw 51 is engaged with a lock projection (not shown) provided on the vehicle-side connector in the connecting direction CD, whereby the charging connector 10 and the vehicle-side connector are held in a connected state.

On the other hand, the release button 52 is provided on or near the rear end of the lever 50. This release button 52 is provided to project outward or upward through a release window 12 formed in (particularly a rear end corner portion of) the housing 11 (particularly an upper or outer end corner portion of the grip part 13). When this release button 52 is operated (e.g. pushed down or inward), the lock claw 51 is lifted or displaced away from or relative to the first housing 20) to be released from its locked state and the charging connector 10 can be separated from the vehicle-side connector. This release button 52 particularly is pushed down by the thumb while the grip part 13 is gripped by the hand.

The front housing 20 is made e.g. of synthetic resin, particularly substantially has a tubular or cylindrical shape and/or substantially is open forward. One or more, particularly a plurality of terminal accommodating portions 21 substantially project forward (or along the connecting direction CD) in the front housing 20. The terminal accommodating portions 21 particularly have a substantially cylindrical or tubular shape and (particularly female) terminals (not shown) at least partly are accommodated in the respective terminal accommodating portions 21. One or more small-diameter wires connected to these one or more (female) terminals (particularly by crimping) particularly are bundled together in the housing 11 to form a large-diameter wire W, which passes in the grip part 13 and drawn out from the rear end of the grip part 13.

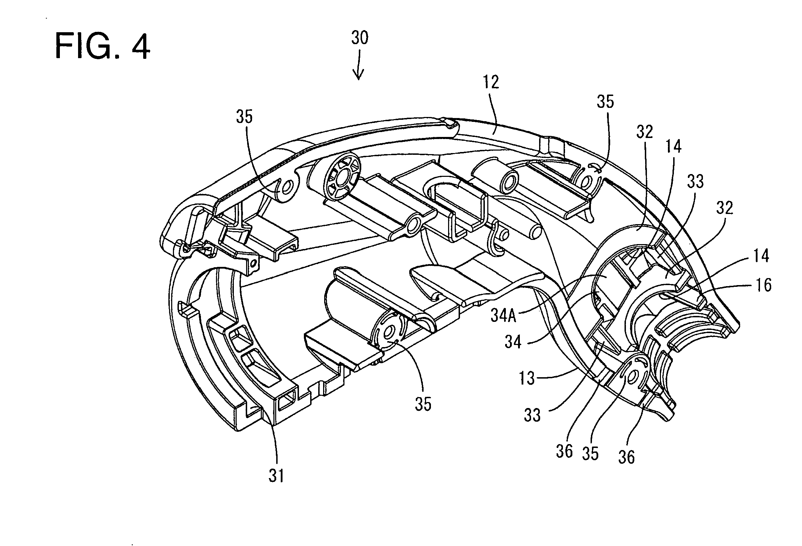

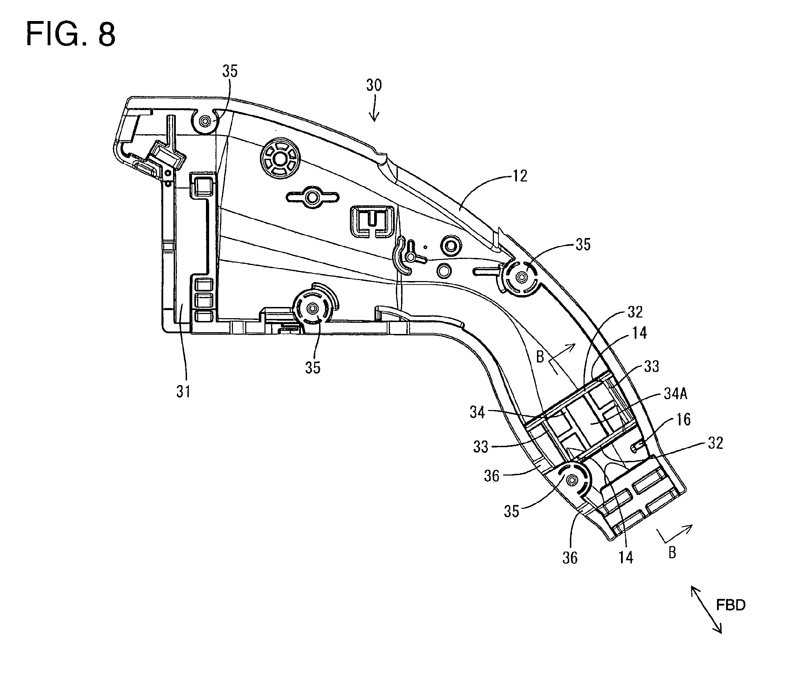

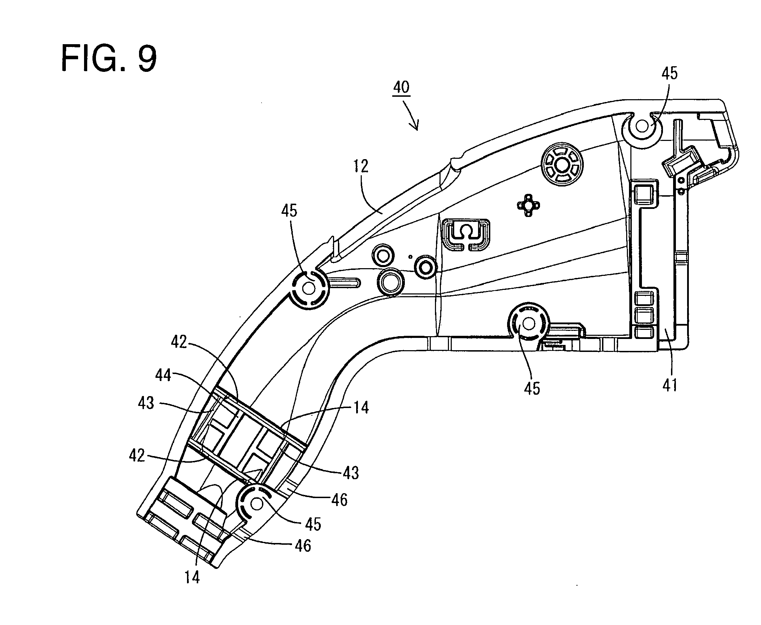

As shown in FIG. 3, a flange portion 22 is circumferentially provided (over at least part of the entire circumference) to project outward on the outer peripheral surface of the rear end of the front housing 20. On the other hand, as shown in FIGS. 4 and 8, a base-side mounting groove 31 into which a (particularly substantially half circumferential) part of the flange portion 22 at least partly is to be fitted or inserted is provided in or near a front end portion of the base-side housing 30. Similarly, as shown in FIG. 9, a cover-side mounting groove 41 into which the remaining circumferential part of the flange portion 22 at least partly is to be fitted or inserted is provided in a front end portion of the cover-side housing 40. When the flange portion 22 is held by the both mounting grooves 31, 41 from lateral (left and right) sides and the both housings 30, 40 are fastened particularly by the one or more bolts B, the front housing 20 is firmly held while being tightly held by the base-side housing 30 and the cover-side housing 40 from lateral (left and right) sides.

In this way, the front end side of the housing 11 is in a backlash-free rigid state and formed as a rigid body, wherefore there is no likelihood of displacing the two housings 30, 40 when the base-side housing 30 and the cover-side housing 40 are assembled and fastened particularly by the bolt(s) B. However, unlike the front housing 20, there particularly is no member firmly held in the grip part 13. Thus, the both housings 30, 40 may be displaced in a tightening direction of the bolts B when the bolts B are tightened.

This is described in more detail below. One or more, particularly a plurality of bolt fastening portions 35, 45 are provided in the housing 11. Out of these bolt fastening portions 35, 45, those 35, 45 most distant from the front housing 20 particularly are provided near the contact (rubber) bush 15 in the grip part 13. In a state before the both housings 30, 40 are assembled, the bolt fastening portion 35 is connected to an opening edge of the base-side housing 30 in the grip part 13 and/or the bolt fastening portion 45 is connected to an opening edge of the cover-side housing 40 in the grip part 13 as shown in FIGS. 8 and 9. When the one or more bolts B are fastened to these one or more bolt fastening portions 35, 45, a force acting in a clockwise direction about the bolt fastening portion 45 particularly may be produced or occur in the cover-side housing 40. As a result, the opening edge located at a side opposite to the bolt fastening portion 45 particularly may try to rotate toward the bolt fastening portion 35 of the base-side housing 30.

Accordingly, at least one positioning rib 16 is provided in the base-side housing 30 to properly position the cover-side housing 40, particularly to prevent the rotation or displacement of the cover-side housing 40. Since this positioning rib 16 particularly is connected to the opening edge substantially facing the opening edge where the bolt fastening portion 35 is provided and/or particularly is arranged as far apart as possible from the bolt fastening portion 35, the proper positioning is particularly effective and a force in a rotational direction particularly can be minimized. The positioning rib 16 particularly projects into the interior of the cover-side housing 40 from the opening edge of the base-side housing 30. Thus, when the both housings 30, 40 are assembled in proper postures, the positioning rib 16 substantially is in contact with the inner surface of the cover-side housing 40. This particularly prevents the rotation of the cover-side housing 40.

The (particularly metal) clip 60 has a (particularly substantially box-shaped) main body 61. A mounting portion where the main body 61 is to be mounted is provided in the housing 11. As can be understood from the comparison of FIGS. 8 and 9, this mounting portion particularly substantially is bilaterally symmetrically divided by the base-side housing 30 and the cover-side housing 40 and/or the mounting portion of the base-side housing 30 and that of the cover-side housing 40 particularly are arranged to substantially face each other with the both housings 30, 40 assembled.

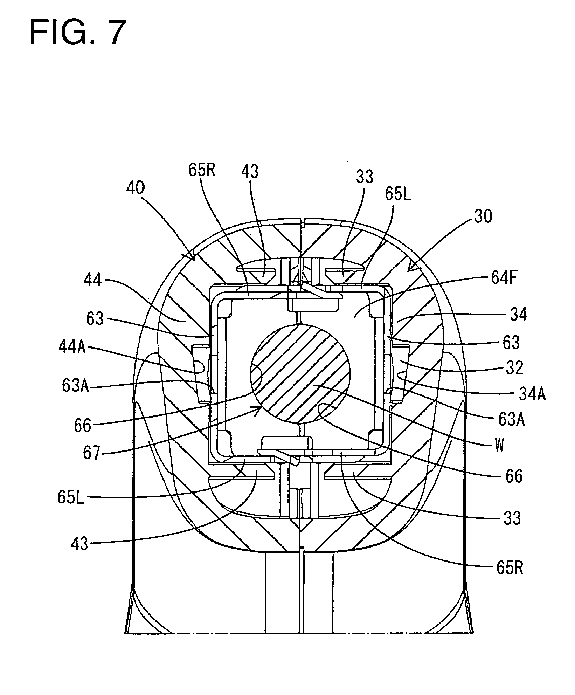

As shown in FIG. 8, the mounting portion of the base-side housing 30 includes one or more, particularly a pair of base-side retaining portion 32, 32 for preventing forward and/or backward movements of the main body 61, one or more, particularly a pair of base-side restricting portions 33, 33 for preventing upward and/or downward movements of the main body 61 and/or one or more, particularly a pair of base-side tightly holding portions 34, 34 for preventing leftward and/or rightward movements of the main body 61. On the other hand, the mounting portion of the cover-side housing 40 includes one or more, particularly a pair of cover-side retaining portion 42, 42 for preventing forward and/or backward movements of the main body 61, one or more, particularly a pair of cover-side restricting portions 43, 43 for preventing upward and/or downward movements of the main body 61 and/ one or more, particularly a pair of cover-side tightly holding portions 44, 44 for preventing leftward and/or rightward movements of the main body 61. Here, vertical direction and lateral direction are based on FIG. 7.

The (both) base-side retaining portion(s) 32, 32 and the (both) cover-side retaining portion(s) 42, 42 substantially are all plate-like and/or held substantially in surface contact with the front and/or rear surfaces of the main body 61 as shown in FIG. 6 to prevent the inclination of the main body 61 while preventing forward and/or backward movements of the main body 61. Further, a passage hole 14 through which the wire W is passed is formed between the (both) base-side retaining portion(s) 32, 32 and the (both) cover-side retaining portion(s) 42, 42.

As shown in FIGS. 8 and 9, the base-side tightly holding portions 34 and the cover-side tightly holding portions 44 particularly are each composed of or comprise a front-back rib extending in forward and backward directions FBD and a vertical rib extending in the vertical direction (or at an angle different from 0° or 180°, preferably substantially normal to the forward and backward directions FBD). Specifically, shown two front-back ribs substantially are arranged in parallel and/or shown two vertical ribs substantially are arranged in series. As shown in FIG. 7, the base-side tightly holding portions 34 and the cover-side tightly holding portions 44 particularly are substantially in line contact with the left and right surfaces of the main body 61 and/or prevent the inclination of the main body 61 while preventing lateral (leftward and/or rightward) movements of the main body 61.

The (both) base-side restricting portions 33, 33 and the (both) cover-side restricting portions 43, 43 particularly substantially are all plate-like and substantially facing parts of the base-side restricting portions 33 and the cover-side restricting portions 43 are spaced apart by a specified (predetermined or predeterminable) distance in the lateral direction as shown in FIG. 7. Further, the both base-side restricting portions 33, 33 particularly are substantially in surface contact with the upper and lower surfaces of the main body 61 and prevent the inclination of the main body 61 while preventing upward and/or downward movements of the main body 61. On the other hand, the (both) cover-side restricting portions 43, 43 particularly are substantially in surface contact with the upper and lower surfaces of the main body 61 and/or prevent the inclination of the main body 61 while preventing upward and/or downward movements of the main body 61. That is, the main body 61 of the (metal) clip 60 particularly is so held as not to rotate relative to the housing 11 since being prevented from moving in three directions (vertical direction, lateral direction and forward and backward directions) and also from being inclined.

Out of the front and rear pairs of retaining portions 32, 42, the rear retaining portions 32, 42 particularly are connected to the bolt fastening portions 35, 45. One or more recesses 36, 46 are formed at the front and/or rear sides of the bolt fastening portions 35, 45 on the opening edges of the (both) housings 30, 40. When the both housings 30, 40 are assembled, one or more, particularly a pair of (front and/or rear) water drainage holes are formed by or near the base-side recesses 36 and/or the cover-side recesses 46. This causes water having entered the interior of the grip part 13 to be discharged to the outside through the both water drainage holes.

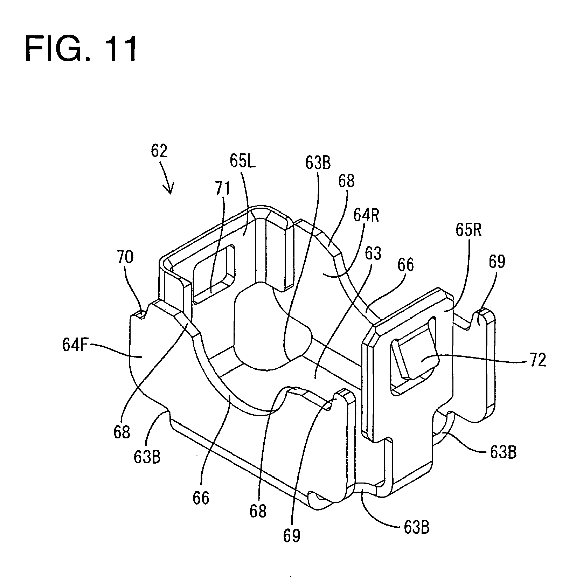

Specifically, the main body 61 of the (metal) clip 60 is formed by assembling half members 62 shown in FIG. 11 with each other. The both half members 62 particularly are identical components and include each a bottom wall 63, a front wall 64F and a rear wall 64R standing upward from the front and rear edges of the bottom wall 63 while substantially facing each other, and a pair of left and right side walls 65L, 65R standing upward from the left and right edges of the bottom wall 63 while substantially facing each other. One or more openings 63B are formed at four corners of the bottom wall 63. Water having entered the interior of the main body 61 can be discharged to the outside by these one or more opening 63B.

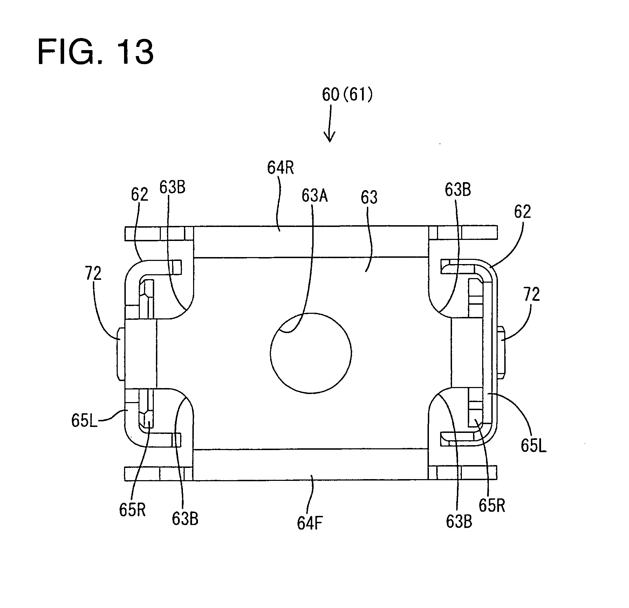

As shown in FIG. 13, a (particularly substantially round) hole 63A is formed to penetrate through (particularly the center of) the bottom wall 63. With the both half members 62, 62 assembled, the both (round) holes 63A, 63A are coaxially arranged as shown in FIG. 13. Further, as shown in FIG. 7, the bottom wall 63 is tightly held by the base-side tightly holding portions 34 and the cover-side tightly holding portions 44 from left and right sides. One or more grooves 34A, 44A are formed at positions of the tightly holding portions 34, 44 corresponding to the (both) round hole(s) 63A, 63A. In this way, water having entered the interior of the main body 61 of the (metal) clip 60 can be discharged to the outside via the round holes 63A, the grooves 34A, 44A and the recesses 36, 46.

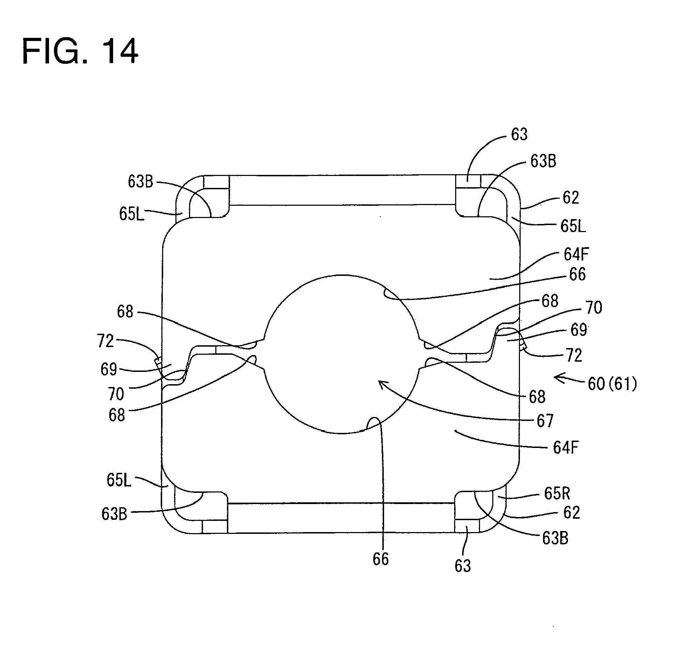

As shown in FIG. 14, respective end edges of the (particularly both) front walls 64A particularly are arranged to substantially face each other and/or butt each other from left and/or right sides. The butting edges of the both front walls 64A, 64A include each an arcuate curved portion 66. A wire insertion hole 67 through which the wire W is at least partly inserted particularly is formed by assembling the two half members 62, 62 such that the curved portions 66, 66 face each other. With the wire W tightly held by the both half members 62, 62, the curved portions 66, 66 particularly bite in or engage the wire W as shown in FIG. 6, but this biting or engagement specifically only resiliently presses the wire W without damaging the insulation coating of the wire W. Thus, the wire W can be firmly retained without being damaged by the metal clip 60.

Further, as shown in FIG. 14, one or more, particularly a pair of escaping portions 68, 68 inclined radially outwardly of the wire insertion hole 67 are provided at the (particularly opposite ends of each) curved portion 66. One or more escaping spaces communicating with the wire insertion hole 67 are formed in areas sandwiched between the escaping portions 68, 68 with the both half members 62, 62 assembled. The wire W can partly escape into these escaping space(s) when being excessively tightly held by the curved portions 66, 66. Further, the front and rear walls 64F, 64R are deformed away from each other with the bottom wall 63 as a center when the curved portions 66, 66 are firmly pressed against the wire W, whereby a pressing force acting on the wire W can be relaxed. By these, the damage of the wire W by the curved portions 66, 66 can be further prevented.

As shown in FIG. 14, the (both) wire insertion holes 67, 67 particularly substantially are coaxially arranged while being spaced apart in the longitudinal direction of the wire W inserted through the both wire insertion holes 67, 67. Thus, a pressing force acting on the wire W can be reduced as compared with the case where the wire W is held only by one wire insertion hole 67.

At least one positioning projection 68 is provided on (particularly one end of each of the butting edges of) the both front walls 64F, 64F, and a stepped portion 70 into which the mating positioning projection 69 at least partly is to be fitted is provide on the other end. With the both half members 62, 62 assembled, the positioning projection(s) 69 is/are fitted in the stepped portion(s) 70 to be locked in the vertical direction, thereby preventing displacements of the both half members 62, 62.

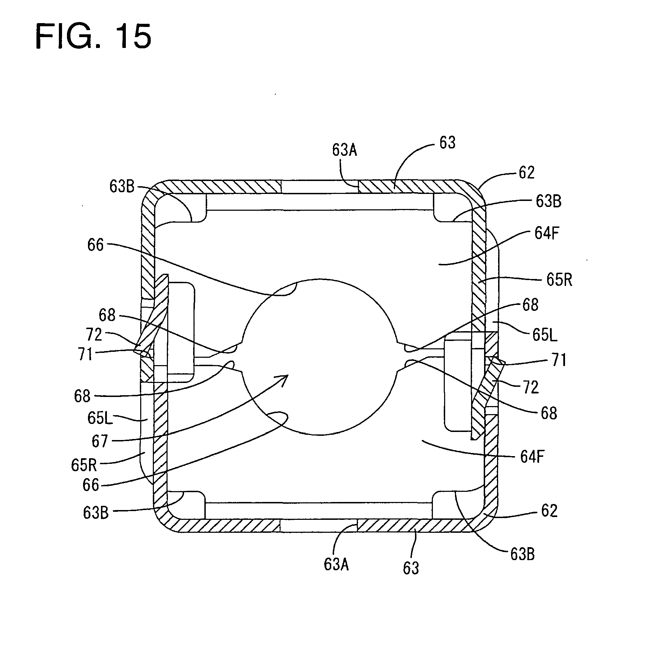

A locking hole 71 particularly is formed to penetrate through one of the left and right side walls 65L, 65R, and a resiliently deformable locking piece 72 is provided at the other particularly by cutting and bending. With the both half members 62, 62 assembled, the locking piece 72 of the one half member 62 at least partly is fitted into the locking hole 71 of the other half member 62 and the tip of the locking piece 72 is engaged with the inner surface of the locking hole 71 as shown in FIG. 15, whereby the both half members 62, 62 are retained. Note that, with the locking piece(s) 72 fitted in the locking hole(s) 71, the positioning projection(s) 69 and the stepped portion(s) 70 particularly come into contact if it is tried to separate the locking pieces 72 from the locking holes 71 in a direction perpendicular to an assembling direction of the both half members 62, 62. This causes the locking pieces 72 to be held fitted in the locking holes 71 and the both half members 62, 62 to be held assembled.

Next, functions of this embodiment constructed as described above are described. First, the components such as the front housing 20 and the lever 50 are assembled with the base-side housing 30 and the (particularly metal) clip 60 is mounted on the wire W. In mounting the (metal) clip 60, the wire W particularly is supported by the both curved portions 66 of one half member 62 and, in this state, the other half member 62 is assembled with the one half member 62 to tightly hold the wire W by the curved portions 66, 66 of the both half members 62, 62. In this way, the (metal) clip 60 is fixed to the wire W.

Subsequently, the (metal) clip 60 is mounted in a proper posture between the both base-side retaining portions 32, 32 in the grip part 13 and between the both base-side restricting portions 33, 33 in the grip part 13. In this state, the front and rear walls 64F, 64R of the half member 62 particularly substantially are in surface contact with the both base-side retaining portions 32, 32, the left and right side walls 65L, 65R of the half member 62 particularly substantially are in surface contact with the both base-side restricting portions 33, 33 and/or the bottom wall 63 of the half member 62 particularly substantially is in line contact with the base-side tightly holding portions 34. When the other half member 62 is assembled with the one half member 62, the wire W is pressed by the curved portions 66, 66. When reaching proper mount positions while being resiliently deformed by the lateral (left and/or right) side walls 65L, 65R, the (both) locking pieces 72, 72 resiliently at least partly return and at least partly are fitted into the (both) locking holes 71, 71. In this way, the two half members 62, 62 are assembled to form the main body 61, and this main body 61 is fixed to the wire W.

Subsequently, when the cover-side housing 40 is assembled with the base-side housing 30, the flange portion 22 of the front housing 20 at least partly is fitted into the mounting grooves 31, 41 of the both housings 30, 40 and the front housing 20 is tightly held by the both housings 30, 40. Subsequently, the one or more bolts B are tightened into the one or more, particularly the plurality of bolt fastening portions 35, 45. Here, as the one or more bolts B are tightened into the bolt fastening portions 35, 45 in the grip part 13, the cover-side housing 40 may try to rotate in a clockwise direction due to a torque produced at the time of tightening. However, the inner surface of the cover-side housing 40 substantially comes into contact with the positioning rib(s) 16 of the base-side housing 30, thereby preventing the rotation of the cover-side housing 40. By tightening all the bolts B in this way, the charging connector 10 is completed.

As described above, in this embodiment, the cover-side housing 40 may try to rotate in the clockwise direction about the bolt fastening portion 35 when the bolt B is tightened. However, since the at least one positioning rib 16 is provided on the opening edge at the side opposite to the bolt fastening portion 35 in the grip part 13, the rotation of the cover-side housing 40 can be prevented by bringing this at least one positioning rib 16 into contact with the inner surface of the cover-side housing 40. That is, it particularly is sufficient to provide the positioning rib(s) 16 only in the base-side housing 30 and it is not necessary to provide the cover-side housing 40 with a certain displacement preventing mechanism. Thus, the both housings 30, 40 can be positioned without being subject to spatial restriction. Further, since the positioning rib(s) 16 particularly is provided at the position distant from the bolt fastening portion 35, a force acting on the positioning rib 16 in a rotational direction can be minimized.

Further, the main body 61 of the (metal) clip 60 particularly is retained by being held from front and/or rear side(s) by the retaining portions 32, 42, held from upper and/or lower sides by the restricting portions 33, 43 and/or held from lateral (left and/or right) side(s) by the tightly holding portions 34, 44. Accordingly, the rotation of the main body 61 of the (metal) clip 60 about the axis of the wire W and/or its displacement in the grip part 13 is/are prevented and the main body 61 particularly is retained in the longitudinal direction of the wire W. Further, since the wire W particularly can be uniformly pressed by the curved portions 66, 66, the damage of the wire W can be prevented. Furthermore, since the escaping portions 68 particularly are provided to allow the wire W to partly escape and a pair of front and rear wire insertion holes 67 are provided, a pressing force acting on the wire W can be reduced and the damage of the wire W can be further prevented.

Accordingly, to position two half members without being subject to spatial restriction, a charging connector 10 is provided including a housing 11 integrally formed by bolting or fixing a pair of half members. A front housing 20 is mounted in a front end portion of the housing 11 and tightly held by two housings 30, 40. At least one positioning rib 16 for positioning the both housings 30, 40 is provided at a position of the base-side housing 30 distant from the front housing 20 and comes into contact with the inner surface of the cover-side housing 40 when the both housings 30, 40 are assembled in proper postures.

### <Other Embodiments>

The present invention is not limited to the above described and illustrated embodiment. For example, the following embodiments are also included in the technical scope of the present invention.
(1) Although the positioning rib 16 is connected to the rear opening edge of the grip part 13 shown in FIG. 8 in the above embodiment, it may be connected to the front opening edge in FIG. 8 according to the present invention. In this case, the bolt fastening portion may be connected to the rear opening edge shown in FIG. 8.

Although the positioning rib 16 is illustrated as a positioning portion in the above embodiment, the positioning portion may not be in the form of a rib according to the present invention. For example, a claw-shaped lock portion may be provided as the positioning portion, a hole may be formed in the inner surface of the cover-side housing, the housings may be temporarily held together by engaging the leading end of the lock portion with the hole and the base end side of the lock portion may be brought into contact with the inner surface of the cover-side housing (peripheral edge of the hole).
(3) Although the positioning rib 16 and the bolt fastening portion 35 are respectively connected to different opening edges in the above embodiment, they may be respectively connected to the same opening edge according to the present invention.
(4) Although the positioning rib 16 is provided in the grip part 13 in the above embodiment, it may be provided in a part other than the grip part 13.

### LIST OF REFERENCE NUMERALS

10 ... charging connector
11 ... housing
13 ... grip part
16 ... positioning rib (positioning portion)
20 ... front housing (connector connecting portion)
30 ... base-side housing (one half member)
35 ... bolt fastening portion
40 ... cover-side housing (other half member)
60 ... clip (holding member)

## Claims

1. A charging connector (10), comprising a housing (11) integrally formed by fixing a pair of half members (30, 40) to each other, wherein:
a connector connecting portion (20) is mounted in a front end portion of the housing (11) and tightly held by the both half members (30, 40); and
at least one positioning portion (16) for positioning the both half members (30, 40) is provided at a position of one half member (30) distant from the connector connecting portion (20) and comes into contact with the inner surface of the other half member (40) when the both half members (30, 40) are assembled in proper postures.

2. A charging connector according to claim 1, wherein the half members (30, 40) are fixed to each other by bolting.

3. A charging connector according to claim 2, wherein:
a plurality of bolt fastening portions (35) are arranged in the one half member (30); and
the positioning portion (16) is provided at such a position as to prevent the other half member (40) from rotating upon receiving a force in a rotational direction produced as the bolting is performed at the bolt fastening portion (35) arranged at a position most distant from the connector connecting portion (20).

4. A charging connector according to claim 3, wherein the positioning portion (16) is connected to one opening edge of the one half member (30) and the bolt fastening portion (35) is connected to another opening edge substantially facing the one opening edge.

5. A charging connector according to any one of the preceding claims, wherein:
the housing (10) includes a grip part (13) which is arranged behind the connector connecting portion (20) and from which at least one wire (W) is drawn out; and
the positioning portion (16) is provided in the grip part (13).

6. A charging connector according to any one of the preceding claims, wherein at least one wire (W) is drawn out from the housing (11), the wire (W) being held fixed with respect to the housing (11) by a holding member (60) being mounted into a mounting portion provided in the housing (11).

7. A charging connector according to claim 6, wherein the mounting portion substantially is bilaterally symmetrically divided by both half members (30, 40) and/or the mounting portion of the one half member (30) and that of the other half member (40) are arranged to substantially face each other with the both half members (30, 40) assembled.

8. A charging connector according to claim 6 or 7, wherein the positioning portion (16) is provided adjacent to the mounting portion.

9. A method of assembling a charging connector (10), comprising a housing (11), comprising the following steps:
providing a pair of half members (30, 40) to form a housing (11) of the charging connector (10);
mounting a connector connecting portion (20) in a front end portion of the housing (11) and tightly holding the connector connecting portion (20) by the both half members (30, 40) when the both half members (30, 40) are fixed to each other; and
positioning the both half members (30, 40) while fixing them by at least one positioning portion (16) for positioning the both half members (30, 40) provided at a position of one half member (30) distant from the connector connecting portion (20), wherein the positioning portion (16) comes into contact with the inner surface of the other half member (40) when the both half members (30, 40) are assembled in proper postures.

10. A method according to claim 9, wherein the half members (30, 40) are fixed to each other by bolting.

11. A method according to claim 10, wherein a plurality of bolt fastening portions (35) are arranged in the one half member (30); and wherein the positioning portion (16) is provided at such a position as to prevent the other half member (40) from rotating upon receiving a force in a rotational direction produced as the bolting is performed at the bolt fastening portion (35) arranged at a position most distant from the connector connecting portion (20).

12. A method according to claim 11, wherein the positioning portion (16) is connected to one opening edge of the one half member (30) and the bolt fastening portion (35) is connected to another opening edge substantially facing the one opening edge.

13. A method according to any one of the preceding claims 9 to 12, further comprising providing the housing (10) with a grip part (13) which is arranged behind the connector connecting portion (20) and drawing out at least one wire (W) from the grip part (13); and wherein the positioning portion (16) is provided in the grip part (13).

14. A method according to any one of the preceding claims 9 to 13, further comprising drawing out at least one wire (W) from the housing (11), and fixing the wire (W) with respect to the housing (11) by mounting a holding member (60) into a mounting portion provided in the housing (11).

15. A method according to claim 14, wherein the positioning portion (16) is provided adjacent to the mounting portion.
